# EUROPEAN PATENT APPLICATION

(11) **EP 2 437 537 A1**
(43) Date of publication of application: **04.04.2012**
(21) Application number: 11165766.4
(22) Date of filing: 11.05.2011
(51) Int. Cl.: H04W 24/02

(54) **Coverage hole detection in cellular wireless networks**

(30) Priority: 30.09.2010 GB 1016422
(71) Applicant: FUJITSU LIMITED, Kawasaki-shi, Kanagawa 211-8588 (JP)
(72) Inventor: Xiao, Hui, Uxbridge, Middlesex UB10 0SW (GB); Vadgama, Sunil Keshavji, Ashford, Middlesex TW15 3RD (GB)
(74) Representative: Stebbing, Timothy Charles

(57) **Abstract**

An automated coverage hole detection (CHD) method based on modifying the setting of a specific parameter of a UE (12) in, e.g., an LTE-based cellular wireless network. Physical RLF events of the UEs, possibly indicative of a coverage hole, are monitored (S10). At least some of the UEs in a given cell are selected for modifying their parameter setting (S30, S40, S50). For UEs that do not have advanced logging and reporting capabilities upon the physical RLF, the existence of a coverage hole is detected by analysing (S70) the correlation between the settings of a timer (T311) and the probability for the UE (12) to transit to RRC_IDLE mode. The settings of the timer are systematically adjusted (S60) via eNB (11) signalling to evaluate the characteristics of the observed RLFs. UEs moving in a medium speed range (such as 30-80km/h) are preferred for selection and/or analysis. For networks that serve a combination of UEs of differing capabilities (e.g. Rel 8/9, Rel 10 or later), the proposed CHD method can be applied in conjunction with advanced UE logging and reporting capabilities to detect the existence of coverage hole problems.

## Description

The present invention relates to wireless communication systems.

In current mobile systems such as CDMA or OFDMA based systems including 3GPP-LTE (LTE), WCDMA, and the WiMAX standards such as IEEE 802.16e-2005 and IEEE 802.16m, autonomous optimisation of the cellular network has become a major factor for operators as they look to reduce and even eliminate some of the burdensome costs associated with operating the network. With respect to the above mentioned technologies, one term applied to this type of network is a Self Organizing Network (SON). (Incidentally, in this specification, the terms "network" and "system" are used interchangeably except where a distinction is clear from the context).

In the early deployment stages of both LTE and WiMAX, for example, the subscriber count will be low thus making radio coverage the primary focus for operators as they dimension, plan, optimise and rollout their network. It is then normal practice, as subscriber count and demand gradually increase, that operators will shift their focus towards increasing capacity to the desired levels through additional radio planning and optimisation.

From early deployment to network maturity, operators spend a great deal of time and money maintaining key performance indicators (KPI's) through an optimisation process involving a number of radio planning engineers analytically evaluating drive test data collected from taking local measurements in an area of coverage problems and adjusting radio parameters in their planning/optimisation tools. These optimal parameters can then be exported to the appropriate network management entities within live networks responsible for holding and controlling network parameters such as, in LTE, the O&M (parameter holding entity) and EM entities (element management for base station control).

It would therefore be desirable to eliminate the above manual process, increasing the number of optimisations/parameter adjustments that are carried out autonomously/ automatically (without human intervention) thus ultimately reducing operating expenditure (OPEX) of the network.

The Self Organizing Network (SON) is a promising solution to optimising the network performance while reducing the time and expense consumed by drive tests. The standardisation of SON features is a key part in Release 9 and Release 10 of the 3GPP LTE-A standards. Since coverage optimisation is a typical task for network optimisation, automated coverage hole detection (CHD), which is the prerequisite for coverage optimisation, has been acknowledged as a key feature of SON.

In cellular wireless systems, a coverage hole is an area in which the signal to interference plus noise ratio (SINR) in downlink (DL) or uplink (UL) is not sufficient to maintain basic connectivity, and there is no coverage from an alternative cell. The occurrence of coverage holes in the unintended area may be due to the construction of new major buildings, which normally become new sources of shadowing losses and make the shadowed area have no or very poor radio coverage.

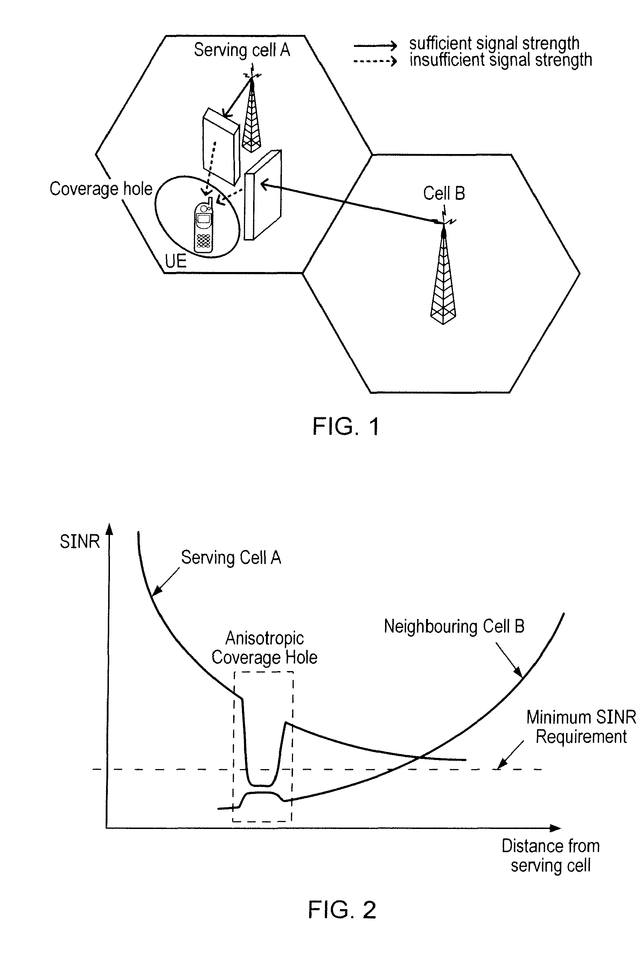

As a simplified example, Figure 1 shows a network with two base stations (eNBs, in LTE terminology) A and B, each providing a coverage area or cell for mobile stations (referred to as UEs or user equipments in LTE) shown as a hexagon. Hexagonal cells are shown here for simplicity, although an LTE system for example may divide each hexagonal area into three cells served by the same eNB, and as will be understood by those skilled in the art, the coverage areas are not actually hexagonal but somewhat amorphous in shape, variable and overlapping. A mobile station obtains a connection to the network via at least one "serving cell". A single mobile station may be in range of more than one base station at the same time, but for simplicity we assume that the UE in Figure 1 is in cell A; in other words served by the base station defining this cell.

Within cell A, which is the "serving cell" for the UE shown in Figure 1, a coverage hole has been formed as new buildings are erected. That is, due to the extra penetration loss caused by the structure, an area of weak coverage/connectivity (in comparison with average network connectivity) is created, which is referred to as a coverage hole. Within this coverage hole, the signal strength from cell A may be insufficient to maintain a call due to the structural penetration loss, and that for cell B may also be insufficient due to the distance related propagation losses.

A coverage hole may either be isotropic, in which case it has the same attenuation with respect to all base station sites, or it may be anisotropic, in which case the attenuation with respect to individual base station sites is different. Figure 2 shows the coverage hole in Figure 1 from the perspective of the base stations in both cell A and cell B. In this example, as can be seen, the hole is very severe for cell A but much less so for cell B, and may even boost the available signal from cell B owing to reflection effects, though not in this case by enough to compensate for distance-related propagation losses.

The result of this weak coverage will potentially involve terminals experiencing Radio Link Failure (RLF) in which downlink and/or uplink coverage fails. A RLF occurs due to degradation of the air interface during an ongoing voice or a data service where generally, the physical layer detects a radio link failure when it becomes unsynchronised for instance. When such a failure is found, the normal action performed by the mobile station is local release of dedicated signalling links between the mobile station and the network, which leads to a dropped call or interruption of a data application.

Incidentally, in Figure 1 the coverage hole is shown completely within the coverage area of a single base station, but the skilled reader will appreciate that it may occur between the coverage areas of two different base stations, or between part-cells (sectors in WiMAX) provided by different transmitters of the same base station.

Figure 1 shows a coverage hole formed by buildings, but another source of coverage holes is the uncertain availability of femto cells and HeNBs (Home eNodeBs), used to boost signal quality over small areas such as offices, shops and homes. Unlike normal (or macro) eNBs these may not always be available to UEs, due to being switched off or configured as Closed Subscriber Group (CSG) base stations, which a non-CSG member UE is not allowed to access. Thus the UE entering an office or shop in this situation may experience a coverage hole and suffer from dropped calls or RLF.

As an embodiment of the present invention will be described later with respect to LTE, it may be worth briefly outlining some relevant aspects of LTE network topology.

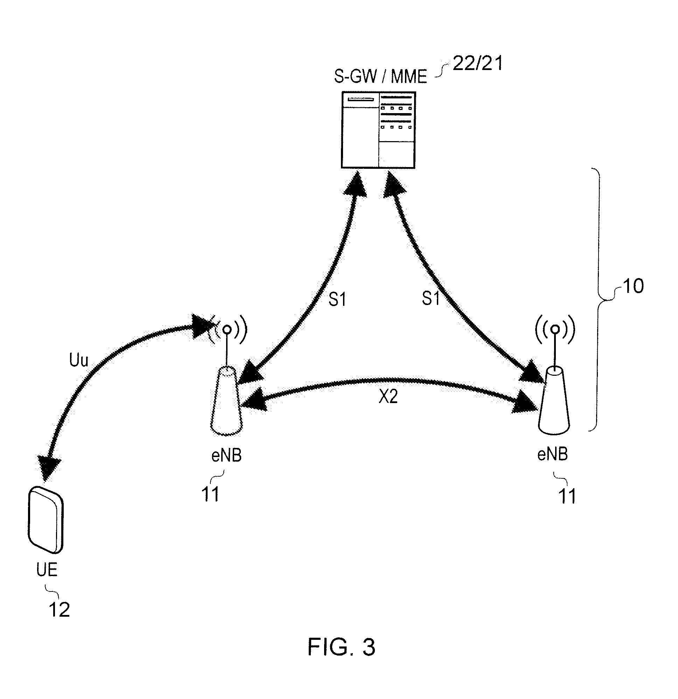

The network topology in LTE is illustrated in Figure 3. As can be seen, each UE 12 connects over a wireless link via a Uu interface to an enhanced node-B or eNB 11, and the network of eNBs is referred to as the eUTRAN 10.

Each eNB 11 in turn is connected by a (usually) wired link using an interface called S1 to higher-level or "core network" entities, including a Serving Gateway (S-GW 22), and a Mobility Management Entity (MME 21) for managing the system and sending control signalling to other nodes, particularly eNBs, in the network. In addition, a Packet Data Network (PDN) Gateway (P-GW) is present, separately or combined with the S-GW 22, to exchange data packets with any packet data network including the Internet.

To implement the above-mentioned SON, some form of SON management functionality has to be incorporated into the network. Where this resides is unimportant for understanding the invention, but for convenience we may assume that there is a SON server attached to the network at a relatively high level. This will typically be a general-purpose computer executing a SON algorithm. Alternatively the SON functionality may be distributed among the MMEs and/or eNBs for example.

As already mentioned, an automated coverage hole detection (CHD) method is a prerequisite for a SON. One approach to automated CHD is to monitor RLFs experienced by mobile stations (henceforth referred to as UEs, though no restriction is to be implied from this). However, for physical RLFs experienced by different UEs, the causes can be various, since for example both coverage hole problems and handover (HO) failures can make the UE in RRC_CONNECTED mode (see below) undergo physical RLF. Therefore the detection of coverage hole problems is more about analysing various causes for physical RLFs, and distinguishing physical RLFs caused by coverage hole problems from those caused by other reasons.

According to a first aspect of the present invention, there is provided an automated coverage hole detection method in a wireless communication system, the system comprising a network of cells provided by base stations, and a plurality of mobile stations which form, and lose, wireless connections with base stations as the mobile stations move relative to the cells, and wherein each mobile station, on losing a connection, starts a timer which expires after a predetermined time period as part of a connection forming procedure, the method comprising:
varying the predetermined time period for one or more mobile stations in at least one cell;
measuring the effect of varying the predetermined time period on the connection forming procedure; and
detecting information about a coverage hole from the effect so measured.

The measuring step may involve collecting information, called event data, on mobile stations' success or failure in reestablishing connections with the base stations.

The method may further comprise collecting information on speeds or speed levels with which the mobile stations move, and in the varying step, selecting mobile stations within a predetermined speed range as said one or more mobile stations.

Alternatively, the method may further comprise collecting information on speeds or speed levels with which the mobile stations move and the measuring step may be restricted to measuring the effect only for mobile stations within the predetermined speed range.

In either case the predetermined speed range is preferably a medium speed range such as 30 to 80 kilometres per hour. The inventors have found that mobile stations in such a medium speed range (between walking pace and fast car/train travel) are most useful for yielding information about coverage holes, as will be explained later.

Preferably, the varying step includes altering the predetermined time period from an initial value to at least one other value.

The varying step may be triggered when occurrences of mobile station physical radio link failures (RLF events) in a cell exceed a predetermined threshold.

The varying step may involve varying the predetermined time period for more or fewer mobile stations (in other words for a subset of mobile stations in a cell) depending on the proportion of physical radio link failures (physical RLF events) in a cell, and/or depending on the speeds/speed levels of mobile station in a cell, such as medium-speed mobile stations for example.

Preferably, the timer chosen for the above purpose is one for which the criterion for starting the timer is a physical radio link failure of the mobile station.

In one embodiment, at least some mobile stations are capable of transmitting a report of a physical radio link failure to the network, in which case selecting mobile stations for the varying step is based on their proximity to an origin of a physical radio link failure report.

In a wireless communication system of the kind wherein mobile stations form connections through Radio Resource Control, RRC, and where the timer is such that expiry of the predetermined time period causes the mobile station to enter an RRC idle state, the measuring step preferably includes a base station determining that a mobile station has entered the RRC idle state.

The information about a coverage hole preferably includes whether or not a coverage hole exists in the vicinity of the mobile stations.

Preferably the varying step is performed by base station signalling to the mobile stations. The base stations may be linked to a SON (Self Organizing Network) server to control such signalling. Preferably also, the SON server performs at least the detecting and/or measuring step. Thus, one role of the SON server may be to determine which of the mobile stations, for which event data has been collected, are medium speed mobile stations.

The timer may be used by the mobile station to detect whether a suitable cell for connection has been found within the predetermined time period. For instance where the system is an LTE-based system, this means a suitable cell for RRC connection reestablishment, and the timer is a T311 timer as defined in the LTE standards.

According to a second aspect of the present invention, there is provided a wireless communication system comprising:
base stations providing a network of cells;
mobile stations which form, and lose, wireless connections with the base stations as the mobile stations move relative to the cells, each mobile station equipped with a timer for use in a connection forming procedure, which timer is configured to start upon the mobile station losing a said connection and to end after the mobile station finds a suitable cell for a said connection or after a predetermined time period; and
a supervising entity (such as a SON server) in wired or wireless communication with the base stations; characterised in that
each base station is configured to vary said predetermined time period for at least the mobile stations within a medium speed range in a cell served by that base station; and
the base station and/or the supervising entity are arranged to determine the results of varying said predetermined time period at least for the mobile stations within the medium speed range and to derive automatically, from said results, information about a coverage hole.

In the above second aspect, the "suitable cell", in a wireless communication system such as LTE, means a suitable cell for RRC connection reestablishment. When the functions of varying the predetermined time period, and/or determining the results thereof, are restricted to medium-speed mobile stations, this presupposes that the base station and/or supervising entity has knowledge of the speeds or speed levels of the mobile stations. Such knowledge can be obtained, at least in general terms, through channel estimation. Alternatively the mobile stations may directly report their speeds to the base station if equipped to do so.

According to a third aspect of the present invention, there is provided a base station for use in any method as defined above and configured for signalling at least some of the mobile stations in its cell to vary said predetermined time period. Again, the "at least some" mobile station may be those travelling in a medium speed range of, say, 30-80 km/h.

According to a fourth aspect of the present invention, there is provided a computer program, which, when executed by one or more processors of a base station or supervising entity of a wireless communication system, performs any of the above-defined methods.

In any of the above aspects, the various features may be implemented in hardware, or as software modules running on one or more processors.

The computer program may be provided in the form of a computer program product, such as a computer readable medium having stored thereon a program for carrying out any of the methods described herein. A computer program embodying the invention may be stored on a non-transitory computer-readable medium, or it could, for example, be in the form of a signal such as a downloadable data signal provided from an Internet website, or it could be in any other form.

Features and preferable features of any and all of the above aspects may be combined.

Reference is made, by way of example only, to the accompanying drawings in which:
Figure 1 shows two cells A and B of a wireless network, and how a coverage hole may be formed in cell A;
Figure 2 shows anisotropy of the coverage hole in Figure 1 as it affects cells A and B;
Figure 3 schematically shows LTE network topology;
Figure 4 depicts a UE state machine for RLF and HO failure behaviour in an LTE network;
Figure 5 is a flowchart of a Coverage Hole Detection (CHD) method in a first embodiment of the present invention;
Figure 6 is a flowchart of a data processing method, additionally employed in a second embodiment;
Figure 7 illustrates a coverage hole scenario used to simulate the effect of the second embodiment;
Figures 8A, 8B and 8C illustrate different traffic types used for the simulation;
Figure 9 shows simulation results for the second embodiment in terms of reestablishment probabilities for the different traffic types; and
Figure 10 shows simulation results for the second embodiment in terms of probabilities of transition to an RRC_IDLE state for the different traffic types.

In the following, the 3GPP LTE system is used as a background to present an embodiment of the present invention. However, it should be noted that the LTE system serves purely as an example and the invention could be applied to any other wireless networks, for example IEEE 802.16m (WiMAX) or others.

A first embodiment of the present invention provides an automated coverage hole detection (CHD) method for cellular wireless networks based on modifying the setting of a UE specific parameter. For 3GPP LTE Releases 8 and 9 UEs that do not have advanced logging and reporting capabilities upon the physical RLF, the existence of a coverage hole is detected by analysing the correlation between the settings of a timer T311 (explained below) and the probability for the UE to transit to RRC_IDLE mode (see below). The settings of the timer are systematically adjusted to evaluate the characteristics of the observed RLFs. For networks that serve a combination of LTE Release 8, Release 9 and later release UEs, the proposed CHD method can still be applied, possibly in conjunction with advanced UE logging and reporting capabilities to detect the existence of coverage hole problems. The method can be adopted by the SON server to automatically detect the existence of coverage holes in the network while saving a lot of time and costs spent on drive tests.

The first embodiment will now be explained in more detail.

In 3GPP systems including LTE, RRC (Radio Resource Control) is the protocol for managing control signalling between UEs and the network, including forming (establishing) and losing (releasing) connections. The state in which a UE is connected to the network is referred to as a "RRC_CONNECTED" mode; on the other hand when a UE has no connection to the network under consideration it is in an "RRC_IDLE" mode (which does not preclude connection to an alternative network using another Radio Access Technology or RAT).

The timer T311 referred to above is used in an RRC connection reestablishment process, in which a UE attempts to attach to any suitable cell within range. Since the UE will initiate an RRC connection reestablishment process upon detection of a physical RLF, if the UE cannot find a suitable cell (i.e. a cell fulfilling the cell selection criterion) for the reestablishment, it will transit to RRC_IDLE state after expiry of the timer T311. The inventors have realised that, if it can be verified that the reason for the UE to transit to RRC_IDLE mode is the expiry of T311, or in other words, no suitable cells found, this is a strong indication for the presence of a coverage hole. Once this can be verified, and by monitoring several UEs over a period of time for occurrence of the RRC_IDLE state, the existence of coverage hole problems can be detected.

Thus, the CHD method of the first embodiment detects the existence of coverage hole problems by investigating the correlation between tuning the setting of timer T311 (i.e., varying its predetermined expiry period in one or more steps) and the resultant probability for certain UE behaviour. Such behaviour is investigated by collecting information, called event data, on the UEs' success or failure in reestablishing connections with the base stations.

The rationale is that, by tuning the setting of this particular parameter within the permissible range, on the one hand, if a coverage hole exists around the UE, it becomes more or less likely for the UE to suffer from coverage hole problems; on the other hand, if there are no coverage hole problems, there will be little or no influence of varying the timer setting on the UE behaviour.

Note that expiry of T311 is linked to DL coverage holes (since the timer runs in the UE and is started when the DL received signal is below a threshold). Therefore, the above technique is most effective for detecting DL coverage holes.

The proposed CHD method is especially suitable to be applied to LTE networks that have Release 8 and Release 9 UEs, since it does not require any additional UE capabilities to assist in the detection. It is also applicable to networks that serve a combination of LTE Release 8, Release 9 and later release UEs. Additionally, since the LTE later release UEs may have some advanced functionalities such as reporting radio link failure (RLF) causes to the network, the CHD method of this embodiment may be employed together with some additional UE capabilities to detect coverage hole problems for networks with mixed kinds of UEs.

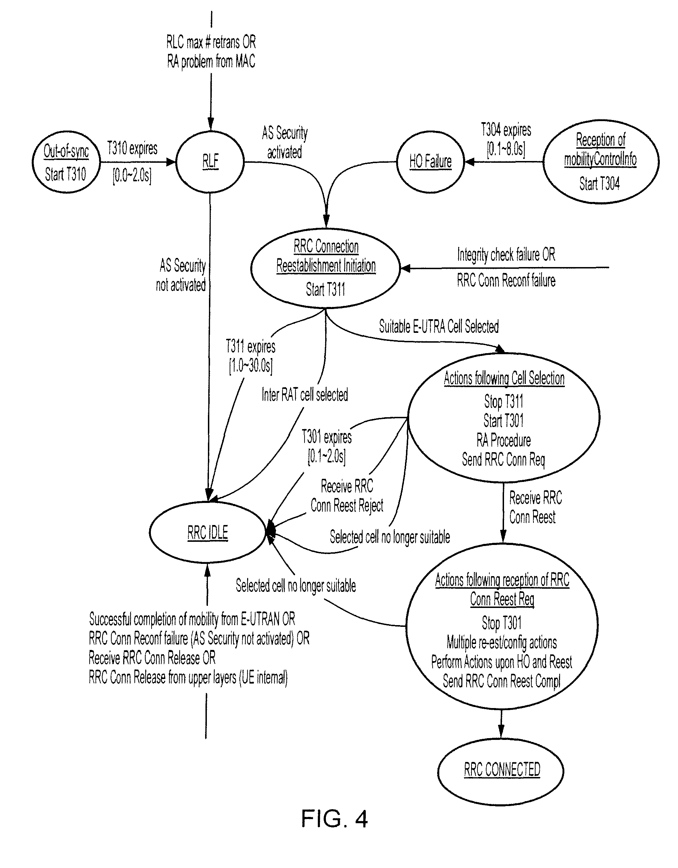

Figure 4 shows the UE state machine in case of radio link failure (RLF) or handover (HO) failure for a 3GPP LTE system. This state machine is disclosed in the document 3GPP TS 36.331, "Radio Resource Control (RRC);Protocol specification", version 9.2.0, March 2010, the disclosure of which is hereby incorporated by reference. Figure 4 employs certain abbreviations for terms including "Request" (Req), "Reestablishment" (Reest), and "Connection", (Conn).

As can be seen, the protocol involves the user of various timers which are triggered within the UE in response to certain events, including the timer T311 already mentioned.

After the detection of a RLF or handover failure, the UE will normally enter the RRC Connection Reestablishment Initiation state and start timer T311. The term RLF in Figure 4 refers to a particular state in a 3GPP LTE system, however, it should be understood that a physical RLF event may occur at any time, e.g. leading up to the HO Failure state. When the UE is in the RRC Connection Reestablishment Initiation state and it cannot find a suitable cell (i.e. a cell fulfilling the cell selection criteria), it will transit to the RRC_IDLE state after expiry of the timer T311. Therefore, expiry of T311 is a strong indication for the presence of a coverage hole. However, whether or not the UE will actually transit to the RRC_IDLE state when encountering a coverage hole depends on the UE speed (if any), the coverage hole size and the configuration of the T311 timer duration. Based on Figure 4, the RRC_IDLE state can be reached through the following events:
● T311 expiry
● Inter RAT cell is selected during cell selection
● T301 expiry (related to random access problem)
● RRC Conn Reest (RRC Connection Reestablishment) Reject is received by UE
● Selected cell is no longer suitable
● Successful completion of mobility from E-UTRAN
● RLF or RRC connection reconfiguration failure while AS security is not activated
● RRC Conn Release is received by UE
● RRC Conn Release event from upper layers

In the above list, RAT denotes Radio Access Technology. Selection of an inter RAT cell means the UE selects the cell from another RAT, e.g. a UE in the E-UTRAN selects a CDMA2000 cell. Likewise, successful completion of mobility implies that the UE moves away from the LTE system to another wireless communication system such as CDMA2000.

If the UE finds a suitable cell within the time period defined by T311, a second phase of RRC Connection Reestablishment includes starting another timer T301. Timer T301 is used, once the UE has found a suitable cell, to start a contention-based RACH (Random Access CHannel) procedure to enable the RRCConnReestReq (RRC Connection Reestablishment Request) message to be sent (please refer again to Figure 4). AS refers to the Access Stratum, which refers to a link layer in the protocol stack.

Despite the large number of possible state transitions to the RRC_IDLE state, only the transition when T311 expires is strongly related to the presence of a coverage hole, since it occurs when the UE was unable to find any suitable cell while timer T311 was running.

That is, during the RRC connection reestablishment process upon a physical RLF (which can be due to HO failure or RLF as shown in Figure 4), if the UE can find a suitable cell during T311 and can successfully become RRC_CONNECTED through the RRC Reest (RRC connection reestablishment) process, then the physical RLF can be assumed not to be a result of a coverage hole problem, since the UE gets recovered.

If the UE can find a suitable cell during T311, but it still goes to RRC_IDLE mode due to other reasons (e.g. T301 expires, RRC Conn Reest Reject or in full, RRC Connection Reestablishment Reject, see Figure 4), then in this case, it is unclear whether a coverage hole problem or not is the cause for the UE to transition into RRC_IDLE, because the expiry of T301 could also be due to RACH (Random Access CHannel) failure. If the UE cannot find a suitable cell for reestablishment, it can be assumed that there is a coverage hole problem since the UE indeed cannot find any cells for the reestablishment.

Altering the expiry time of T311 takes the advantage of the last property: if a longer time is allowed for the UE to search for the suitable cell, then the chance for the UE to move out of the coverage hole and find a suitable cell is higher, thereby making reestablishment more likely to succeed and the UE less liable to suffer from the coverage hole problem. This is the correlation between changing the timer expiry setting and the UE behaviour.

As indicated in Figure 4, the duration of T311 (in other words its predetermined expiry time) can be set anywhere in the range from 1.0 s to 30s. The setting of T311 depends on the implementation. The initial value may be based on the minimum time required for the UE to complete cell search, which is determined by Nfreq*Tsearch, where Nfreq is number of frequencies the UE needs to check and Tsearch is the time needed to select a cell.

So, as mentioned, the CHD method of the first embodiment includes detecting the existence of coverage hole problems by modifying the setting of the UE specific timer T311 within the permissible range, which is used in 3GPP LTE systems for cell selection during the RRC connection reestablishment process upon the occurrence of physical radio link failure. Considering a number of UEs within the same geographical area (e.g., cell) if there is correlation between tuning the setting of timer T311 and the UE probability for the transition into the RRC_IDLE state, then the existence of coverage hole problems is detected. If they are uncorrelated, then other causes for the RLF are more likely.

The expected correlation is that, for example, if the duration of timer T311 is increased within the permissible range, then the number of UEs transitioning into the RRC_IDLE state should decrease, since more time is allowed for the UE to move out of the coverage hole area to find a suitable cell for reestablishment. On the other hand, if the timer T311 expiry time is decreased to a certain extent, i.e. reduced whilst keeping it larger than the minimum time amount required for cell search, then the number of UEs transitioning into the RRC_IDLE state should increase, as now the UE is allowed less time to move out of the coverage hole area to find its suitable cell for reestablishment.

The "tuning" (setting variation) range for the timer is preferably *T*_{minreq}<t<*T*ₘₐₓ*,* where *T*_{minreq} represents the minimum time required for cell search and *T*ₘₐₓ stands for the maximum time allowed for T311 (30s). If there exists a coverage hole, by making T311 larger, the possibility for UEs to suffer from the coverage hole problem is smaller, otherwise, the possibility is higher. If there is no coverage hole, altering the value will not influence the UE's behaviour, because once the UE finds a suitable cell, timer T311 will stop, and subsequently the UE's behaviour will be affected by other factors rather than T311. For example, although suitable cell is found during T311, the UE may go to RRC_IDLE during T301 (0.1 ― 2 sec) due to RACH failure.

The above principle is especially convenient for 3GPP LTE systems with Release 8 and Release 9 UEs, since it does not require any additional UE capabilities. It can also be applied to LTE-A systems that serve a combination of Release 8, Release 9 and later release UEs.

That is, for networks that serve mixed kinds of UEs, some of which have advanced functionalities such as reporting RLF causes to the network, it is possible to apply the proposed CHD method to UEs that are not capable of reporting RLF causes, and at the same time, log and report the information of T311 expiry by UEs that have the advanced functionalities. Thus the existence of coverage hole problems can be detected by using the proposed method together with the reported information from UEs with advanced features. Furthermore, if location information preceding the physical RLF can be provided to the network by advanced UEs, then the location of the coverage hole can be estimated more accurately, and/or suitable candidate UEs for varying their T311 settings can be selected easily (see below). The UE speed and location information can be obtained from the inherent locating ability of the system, or from the assistance of GPS if the UE is capable of providing GPS-assisted location information to the network.

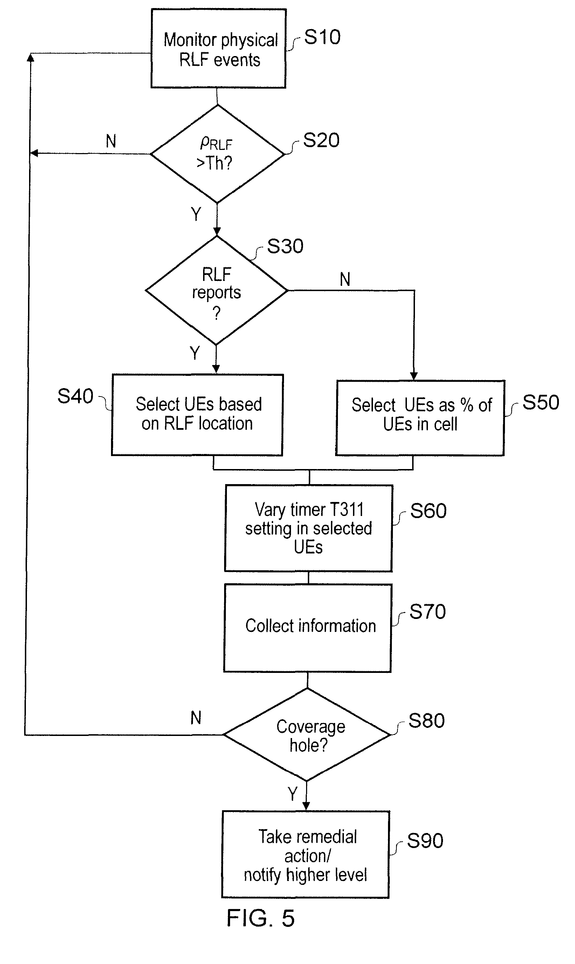

The CHD method of the first embodiment is shown in the flowchart of Fig. 5.

The process begins (step S10) with the eNB monitoring the UEs connected to it, to collect event data including physical RLF events. "Event data" can include a range of events such as handover process related events and RRC connection reestablishment process related events, and may require analysis in order to determine success or failure of reestablishment, and reasons for the failed reestablishment, for example, due to no suitable cell being found or other reasons.

As will be apparent from the earlier discussion, physical RLF events include successful and some kinds of unsuccessful RRC Connection Reestablishment events (due to no UE context at the eNB), which can be detected through the reception of RRC Connection Reestablishment Request message at the eNB, and some other kinds of unsuccessful RRC Connection Reestablishment events which result in UE transitioning to the RRC IDLE state. Here, it should be noted that the successful and unsuccessful RRC connection reestablishment events due to no UE context at the eNB represent the case that a suitable cell can be found during the reestablishment process.

In 3GPP LTE or LTE-A systems, the eNB can detect that the UE has entered the RRC_IDLE state if, while the eNB assumes that the UE is in RRC_CONNECTED state, the UE does not reply to RRC messages, does not send expected RRC messages or through other implementation specific solutions. Consequently, it is possible for the eNB to monitor the UEs for which it has established connections, to determine occurrences of RRC_IDLE states and in turn to infer (see Fig. 4) RLFs of those UEs due to coverage hole problems. Depending on where the SON server is located, the eNB may pass information on RLFs higher up the network.

Next, (step S20) the SON server decides whether to trigger the timer-setting process. This decision is based on detection of physical RLF events, which includes successful and unsuccessful RRC Connection Reestablishments events (= reception of RRC Connection Reestablishment Request message at the eNB) and UEs transitioning to RRC IDLE state (detected as explained in the previous paragraph).

For example, the triggering criterion for the aforementioned detection process can be that, if the ratio (*ρ_{RLF}*) of the number of physical RLF occurrences to the number of active connections (or to the traffic load) in a cell per hour exceeds a predefined threshold (Th), the network can start to modify the settings of timer T311 for at least some of the UEs in that cell to test the correlation between tuning the timer T311 and UE behaviour. The "at least some of the UEs" is referred to henceforth as a "subset" of the UEs in a cell; however, it will be understood that this "subset" may comprise any number from one up to all the UEs in the cell. This modification of timer settings is achieved by eNB signalling to the selected UEs, under supervision of the SON server.

Then (S30) a check is made of whether any direct RLF reports are available, typically from more advanced UEs for which location information will be available. If some kind of UE location information preceding the physical RLF is available, which can provide the eNB (and higher-level entities) with some general idea of where the RLF reports are from, it becomes possible to modify the settings of timer T311 especially for UEs liable to pass through the suspicious area. In other words the eNB may select (S40), as the subset of UEs, those UEs which are in the vicinity of the UE location information already available, and/or whose current velocity is expected to bring them to that area. A speed range of UEs can also be taken into account when selecting the subset of UEs, as explained below. In this way, behaviour information can be collected from those UEs that are more likely to be affected by tuning the setting of timer T311, which can make the collection of valuable UE behaviour information for the CHD purpose more efficient, and reduce any deleterious effects on other users. (As will be apparent, some of the UEs in the cell may be stationary but it is necessary in this embodiment for one or more of the UEs to be moving).

If no UE location information is available (S50), the method of the invention can modify the settings of timer T311 for a certain percentage of UEs in a cell, to examine the change in UE behaviour. If the detected ratio *ρ_{RLF}* is high, a smaller percentage of UEs can be used as the subset for which the settings of timer T311 are modified; otherwise a higher percentage of UEs should be placed in the subset, other things (in particular the time period for monitoring) being equal. Alternatively, it is possible to tune the settings of timer T311 for a fixed percentage of UEs in a cell and use various time periods to collect the UE behaviour information, e.g. if the detected ratio *ρ_{RLF}* is high, the time period used for UE information collection could be shorter; otherwise a longer time period could be used.

Thus, in either case the eNB signals the selected subset of UEs to change the duration of timer T311 (S60), under control of the SON server. The timer setting may be set a plurality of times, to different values, each for a defined period to allow data to be collected. Changing the timer expiry value in a series of small steps may avoid unnecessary degradation of user experience. For example, when T311 is small, UEs are more likely to transition to RRC_IDLE state (= dropped call). Therefore, by reducing T311 in small steps, it may be possible to reduce T311 sufficiently to detect the presence of a coverage hole whilst avoiding reduction of T311 to unnecessarily small values.

For the purposes of the present CHD method, the range of timer settings is more important than the absolute values chosen. Both increasing and decreasing the timer duration from its initial value are equally effective. However, increasing T311 is preferable from the standpoint of users, since then fewer UEs will transition to RRC_IDLE state and users will experience fewer dropped calls. Whether to increase or decrease the timer setting from its initial value may also depend on the initial setting of T311 (which is an operator's choice) with respect to the possible range of T311 values.

To avoid unnecessary signalling it may be preferable to change the setting of the whole subset of UEs at the same time and to the same value, though this is not essential.

Next (S70) the results of changing the timer setting need to be collected, through analysis of the event data observed over a suitable observation time period. This observation time depends on the targeted confidence level for the detection of a coverage hole and the number of UEs per time unit which experience the coverage hole. The confidence level increases with increasing number of observations of UEs which are affected by the coverage hole (i.e. for which we observe whether or not they go to RRC_IDLE state). Without having any location information of the UEs (and the coverage hole), the confidence level is proportional to (UE density in the cell) x (observation time).

If not collected by the SON server itself, the results are forwarded to the SON server. After collecting the UE behaviour information, the existence of coverage hole problems can be detected (S80) based on comparing, for example, the ratio (*ρ_{lDLE}*) of the number of UEs transitioning into the RRC_IDLE state to the number of active connections (or to the traffic load) in a cell per hour before and after tuning the setting of timer T311. A more sophisticated data processing method for use in this step is explained below with respect to the second embodiment of the invention.

As already mentioned the method of the invention is particularly effective for identifying coverage hole problems on the downlink; however any such problems may indicate the need for further investigation of the uplink and/or other system characteristics.

If no coverage hole is found (S80, N), the process returns to the start. The conditions causing RLFs may still exist, of course. In this case it may be desirable to inhibit re-triggering of the timer setting for a certain time to avoid unnecessary effects on users.

On the other hand if a coverage hole is determined to exist (S80, Y) then some form of action is taken in response, which may include taking remedial action and/or notifying a higher-level entity. Normally, the results would automatically be input into a coverage hole compensation algorithm/entity, which may also be part of the SON server. The SON server may thus be able to reconfigure the network in some way for coverage hole compensation (techniques for which are outside the scope of the present method). Human authorisation/review of the modification of the parameters suggested by the SON server/algorithm may also be desirable. Therefore, notifying the results (i.e. the detection of coverage holes) to a human operator is an option.

The above describes a basic CHD method in accordance with the present invention; However, there are some practical factors that can influence the accuracy (reliability) of the evaluation of the correlation effect when implementing this CHD method in various scenarios.

Therefore, in order to measure the correlation effect in a more reliable way, the second embodiment involves processing the event data collected from UEs before evaluating whether there exists the correlation effect (step S80 in Figure 5). Implementing the CHD mechanism in accordance with the first embodiment with the proposed data processing method of the second embodiment can improve the robustness of the performance of the CHD algorithm against various implementation scenarios.

There are some practical factors which need to be dealt with when implementing the proposed CHD mechanism in various scenarios, since they can affect the evaluation reliability of the correlation effect. To be specific, since there is no a *priori* knowledge of coverage holes in the network, e.g. the size of coverage hole or the number of coverage holes, when tuning the timer's value within its permissible range, there are some circumstances with certain traffic speed distributions and traffic type variations that can make the measurement of the correlation effect through the event data collected from UEs more difficult than the other cases.

For example:
(1) Consider the case that the coverage hole size is relatively large (e.g. of a radius greater than 60 m in a 3-sector cell of radius 300 m), and UEs that go across the CH area are of low speed such as pedestrians with 3km/h. Since the configurable range of T311 is 1 s to 30s, tuning the value of T311 from 1 s to 30s for these low speed UEs cannot help them increase the probability to get successful reestablishment since they are not able to move out of the coverage hole area to find the suitable cell even when T311 is set to the longest duration of 30s. Therefore, the event data collected from the UEs experiencing this coverage hole area will always be 'transition to RRC_IDLE state' events before and after tuning the timer's setting, which will lead to the conclusion that there is no correlation between tuning the timer's setting and the UE probability for transitioning into RRC_IDLE state. Hence detection of CH problems fails by using these UE event data samples.
(2) Consider a case similar to case (1), except that the coverage hole size is relatively small (with radius smaller than 15 m in a 3-sector cell of radius 300 m), and now UEs which go through the CH area travel with high speed (for example, motorway or rail traffic with 120 km/h). Such high speed UEs can always get out of such a small CH area and obtain a successful connection reestablishment, even when the T311 is tuned to the shortest possible value of 1s. In this case, the event data collected from the UEs entering this coverage hole area will always be successful reestablishment events. Again in this case, the detection of CH problems fails because no correlation effect is identified by using these UE event data samples.
(3) There are cases where the traffic type in terms of speed distribution varies with time, which may have an impact on the measured effect. For instance, if there is a coverage hole in the network, when tuning the timer's value from low to high and collecting event data from UEs corresponding to each configuration of the timer, if the speed distribution of the traffic is 50% low speed UEs and 50% medium and high speed UEs when the timer's value is low, and that changes to 80% low speed UEs and 20% medium and high speed UEs when the timer's value is high, then as the timer value increases, the UE probability of reestablishment may not increase, and that of entering RRC_IDLE mode may not decrease, due to the increased number of low speed UEs. In other words, temporary traffic congestion or the like (such as at rush hour) may mask the presence of a coverage hole.

Therefore, in order to use the UE event data collected from all sorts of scenarios to accurately and reliably evaluate the effect of varying the timer's setting, the second embodiment provides a data processing method to be carried out by the SON server as a more sophisticated implementation of step S80 in Figure 5 for the CHD algorithm in the first embodiment.

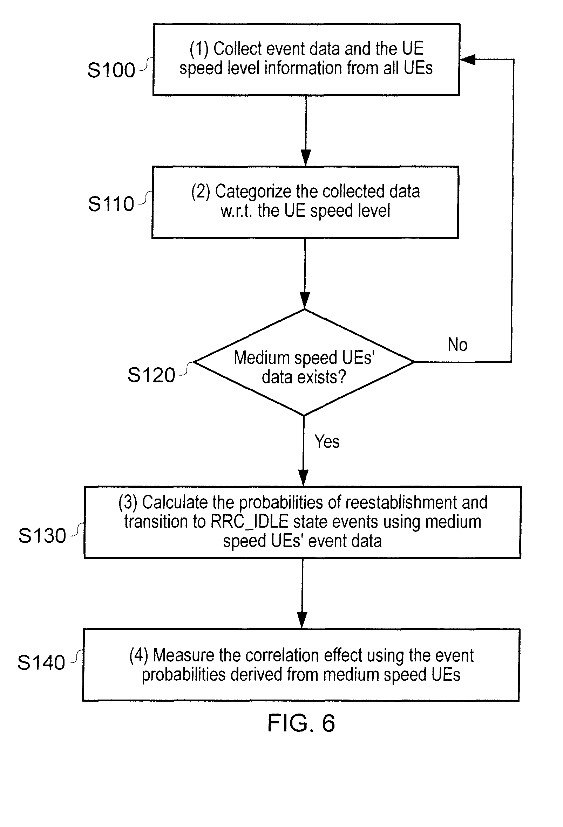

Figure 6 shows steps in this data processing method. It is assumed that the first embodiment has already been performed for some time allowing event data to be gathered (step S70 in Figure 5).

In a first step (S100 in Figure 6), the SON server collects the event data (RLF events) from any subset of UEs up to and including all UEs in the network, together with information on each UE's speed level. This step may collate data with respect to any number of coverage holes simultaneously.

Next (step S110), the SON server categorizes the collected data with respect to some speed ranges or speed levels of UE. Any desired number of categorizations may be employed, but "medium speed" UEs are of most interest as explained below. In the example below, there are three categories (ranges) of low, medium and high speed. Here, speed level does not mean the exact speed value of each UE, and only needs to indicate the general category of the UE's speed. For example, pedestrian users are taken as low speed UEs, users in motorway vehicles or trains are often considered as high speed UEs, and the traffic in between is regarded as medium speed UEs. It is assumed that the base station (BS) can work out the general level of UE speed, for example, through channel estimation. Alternatively, the UEs may be capable of reporting their speeds of movement directly.

Only data from medium-speed UEs is considered further (S120). In the example shown in the flowchart, the presence of medium-speed data is checked for, the method returning to the start if no such data exists. As an alternative, it would be possible to replace steps S100 to S120 by a single step of collecting data from medium-speed UEs only.

Then (S130), the SON server uses the medium-speed UEs' event data to calculate the probability of a connection reestablishment event and that of the transition to an RRC_IDLE state event.

Lastly, the SON server measures (S140) the correlation effect between tuning the timer's setting and the UE probability for the transition into the RRC_IDLE state, using the event probabilities derived from medium speed UEs.

A simulation was carried out to assess the effectiveness of the above implementation method.

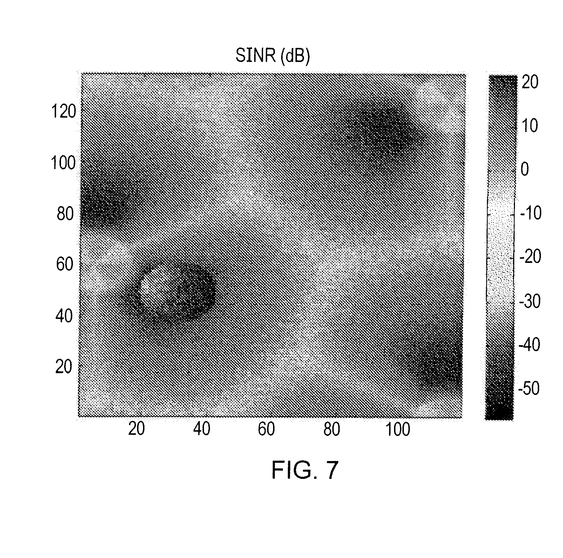

Figure 7 demonstrates the coverage hole scenario used in the simulation in terms of a map of Signal-to-Interference-plus-Noise Ratio (SINR). The known 3GPP LTE simulator was used to generate the SINR distribution in the network. The horizontal axis and vertical axis in Figure 7 represent the horizontal and vertical distances relative to a certain reference point in the network. Thus, each pair of horizontal and vertical coordinate values specifies one location point in the network. Three BSs are present in this simulation (indicated on the left-hand edge, and in each of the right hand upper and lower corners in the Figure). Basically, the closer the location point to the BS is, the higher the SINR is, which is demonstrated by the gradually-changing shading in the map (lighter = better). However, in the circular area centered around y=50, x=30, an isotropic coverage hole is simulated by degrading the signal strength with respect to all BSs by 100dB. The radius of the CH is 60m, which is a relatively large one, since the inter site distance (ISD) is 500m. The crosses around this circular area in Figure 7 stand for the starting and ending points of the UEs' movements, and the lines crossing the coverage hole depict the travel routes of UEs in the simulation.

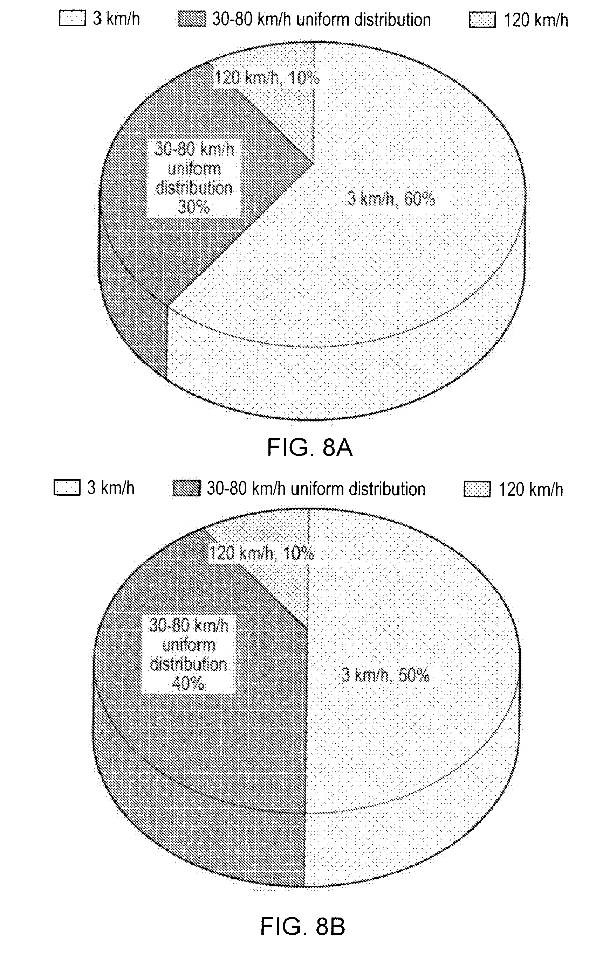

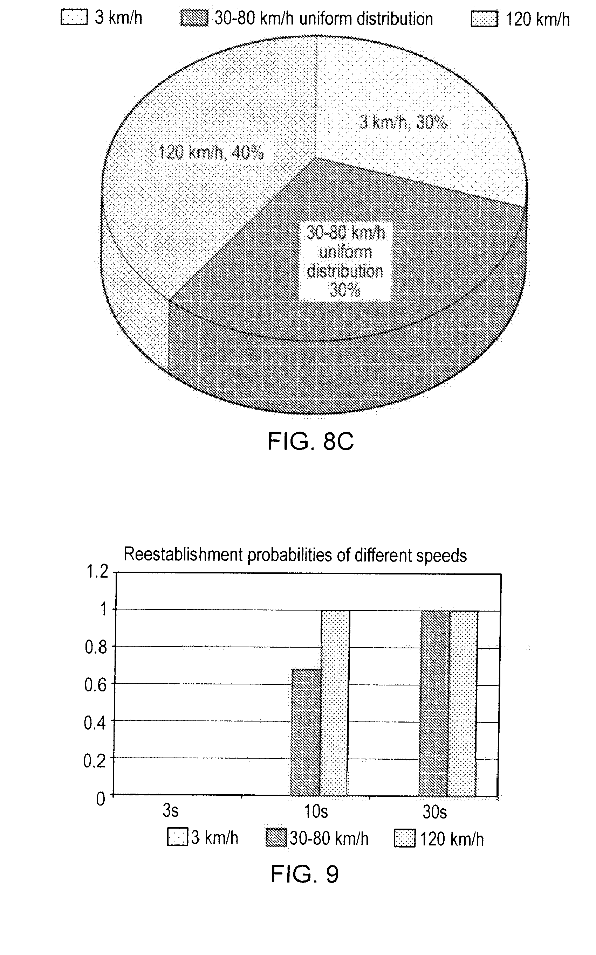

Figure 8 shows the assumed traffic types in the simulation. When T311 is set as 3s for users, the traffic type is assumed to be that in Figure 8A, based on which the event data is collected once; when T311 is changed to 10s and so on, the traffic types are those shown in Figure 8B and 8C respectively, and the event data is collected correspondingly. Low speed and high speed UEs are simulated by using fixed velocity values 3 km/h and 120 km/h respectively. Medium speed UEs are simulated by generating UEs' velocities from a uniform distribution on 30 km/h to 80 km/h.

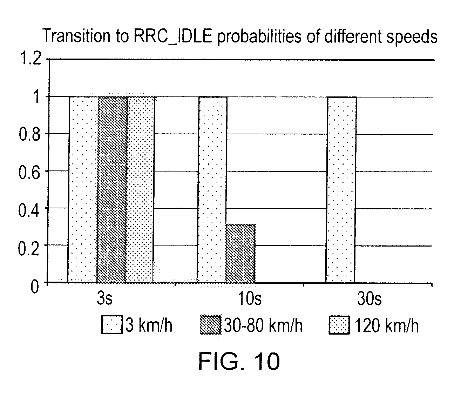

The changing tendencies of event probabilities for the connection reestablishment event and the transition to RRC_IDLE state event are plotted in Figures 9 and 10 respectively. As will be apparent from the earlier discussion, these are complementary types of RLF event: if a UE does not succeed in reestablishment it will transition to RRC_IDLE (Fig. 4).

Thus, Figure 9 shows the probability of a UE, in each speed category, re-establishing a connection within the set duration of T311. Likewise Figure 10 shows the probability of a transition to RRC_IDLE state (representing a failure to reconnect as explained above). In each of these Figures, the comparison of measured effect by using UEs' data from different speed levels is demonstrated. Note that no low speed UEs at all are shown in Figure 9, whilst the probability in Figure 10 is 1 (100%) for the low speed UEs, indicating that the low speed UEs are unable to overcome the CH at any timer setting.

Fig. 9 shows that high-speed UEs have a part to play in revealing the correlation effect, because they show an increase in the probability of reestablishment when the timer setting is tuned from 3s to 10s. Most revealing are the medium-speed UEs, which show an increasing probability of reestablishment (and consequently decreasing probability of RRC_IDLE state) each time the timer setting is increased.

On the other hand, it can be seen that it is not reliable to use the low speed UEs' data to measure the correlation effect, because the low speed UEs are not able to move out of the coverage hole area even if the timer is tuned to its maximum duration. By contrast, the measured effect by using the medium speed UEs' data is correct and can result in the successful detection of CH problems. It can be observed that in this case, the measured effect given by high speed UEs' data is also correct, because the size of CH is large in this simulation and therefore high speed UEs play a role in the correlation effect. However, for the aforementioned case (2), high speed UEs' data may not be able to reflect the real situation very well.

To summarise the benefits of the present invention, since automated CHD has been widely acknowledged as a key capability of Self Organising Networks (SON), the proposed methods can be adopted by the SON server to automatically detect the existence of coverage holes in the network while saving a lot of time and costs spent on drive tests.

In particular, embodiments of the present invention can be applied effectively to LTE networks serving any mix of Release 8, Release 9 and later release UEs, to resolve the ambiguity between RLFs caused by coverage problems and other causes.

Various modifications are possible within the scope of the present invention.

Although the above description refers to detection of coverage holes, the present invention is broader than merely detecting coverage holes per se. For example, it may be that the existence of a coverage hole per se is already known, yet it may be desired to gauge its severity at a certain point in time. Thus, to generalise, what the present invention provides is not necessarily (or not just) detection of a coverage hole but information about a coverage hole.

Although the above detailed description has referred to an LTE wireless communication system as an example, this is not essential, and the same technique can be applied to any kind of system in which a suitable timer(s) can be identified, for which changing the expiry time may be expected to yield information about coverage holes. In the claims, the term "mobile stations" is intended to embrace any kind of portable subscriber stations used in wireless communication system, including mobile stations normally denoted by MS in WiMAX and UE in LTE.

For simplicity, the above description has assumed that the coverage hole is wholly within a cell of a single base station (eNB). However, the present invention can be applied to coverage holes existing between, or within range of, two or more eNBs, in other words in a handover region. At a given point in time, only one eNB will serve a particular UE (=serving cell/eNB). However, when the coverage hole occurs in the handover region, then information from the two involved eNBs can be utilised at the SON server. Using information such as eNB/cell ID and UE ID the SON server can match information received from multiple eNBs to a particular UE and a rough location. Moreover the SON server can analyse data on a network-wide basis, allowing any number of coverage holes to be detected in different parts of the network.

A "subset" of mobile stations was selected in the described method as the target of varying the T311 timer setting; this may consist of the medium-speed UEs referred to in connection with the second embodiment. However, the term "subset" is not limited in any way. In a cell with relatively few users the "subset" may consist of all the available mobile stations. Although less preferable, even a single UE could provide useful information if monitored for a sufficiently long observation time.

Reference was made to "GPS" in the above description, but this is intended to cover any kind of positioning system distinct from the network's inherent locating ability, whether satellite-based or not.

Reference was made earlier to "isotropic" and "anisotropic" holes, but in the present invention the type of coverage hole is not important. The only assumption made is that inside the coverage hole the minimum required SINR (and/or received signal strength or another signal quality measure) is not met for any cell, in which case the call will be dropped. Otherwise, if a cell meets the minimum required SINR, then the UE will handover to that cell when entering the coverage hole and thereby maintain connectivity (maybe at a reduced data rate). In terms of detecting the hole, information from two eNBs may be required in case the hole is located in the handover region, otherwise information from the serving eNB is sufficient.

## Claims

1. An automated coverage hole detection method in a wireless communication system, the system comprising a network of cells provided by base stations, and a plurality of mobile stations which form, and lose, wireless connections with base stations as the mobile stations move relative to the cells, and wherein each mobile station, on losing a connection, starts a timer which expires after a predetermined time period as part of a connection forming procedure, the method comprising:
varying the predetermined time period for one or more mobile stations in at least one cell;
measuring the effect of varying the predetermined time period on the connection forming procedure; and
detecting information about a coverage hole from the effect so measured.

2. The method according to claim 1 wherein the measuring includes collecting event data on the success or failure of mobile stations in reestablishing connections with the base stations.

3. The method according to claim 1 or 2 further comprising collecting information on speeds or speed levels with which the mobile stations move, and in said varying, selecting mobile stations within a predetermined speed range as said one or more mobile stations.

4. The method according to claim 1 or 2 further comprising collecting information on speeds or speed levels with which the mobile stations move, and in said measuring, measuring the effect only for mobile stations within a predetermined speed range.

5. The method according to any preceding claim further comprising triggering varying the predetermined time period when occurrences of mobile station physical radio link failures in a cell exceed a predetermined threshold.

6. The method according to any preceding claim comprising varying the predetermined time period for more or fewer mobile stations depending on the proportion of mobile station physical radio link failures in a cell.

7. The method according to any preceding claim wherein a criterion for starting said timer in a mobile station is a physical radio link failure of the mobile station.

8. The method according to claim 7 further comprising at least some mobile stations transmitting a report of a radio link failure to the network, and selecting mobile stations when varying the predetermined time period based on their proximity to an origin of a radio link failure report.

9. The method according to any preceding claim wherein the mobile stations form connections through Radio Resource Control, RRC, and expiry of the predetermined time period causes the mobile station to enter an RRC idle state;
the measuring step comprising a base station determining that a mobile station has entered the RRC idle state.

10. The method according to any preceding claim wherein the base stations are linked to a SON server which performs at least the detecting step.

11. The method according to any preceding claim wherein the timer is one used by the mobile station to detect whether a suitable cell for a connection has been found within the predetermined time period.

12. The method according to claim 11 wherein the system is an LTE-based system and wherein the timer is a T311 timer as defined in the LTE standards.

13. A wireless communication system comprising:
base stations providing a network of cells;
mobile stations which form, and lose, wireless connections with the base stations as the mobile stations move relative to the cells, each mobile station equipped with a timer for use in a connection forming procedure, which timer is configured to start upon the mobile station losing a said connection and to end after the mobile station finds a suitable cell for a said connection or after a predetermined time period; and
a supervising entity in wired or wireless communication with the base stations; wherein
each base station is configured to vary said predetermined time period for at least mobile stations within a medium speed range in a cell served by that base station; and
the base station and/or the supervising entity are arranged to determine the results of varying said predetermined time period at least for the mobile stations within the medium speed range and to derive automatically, from said results, information about a coverage hole.

14. A base station for use in the method according to any of claims 1 to 12 and configured for signalling at least some of the mobile stations in its cell to vary said predetermined time period.

15. Software which, when executed by one or more processors in a base station and/or supervising entity of the wireless communication system, performs the method according to any of claims 1 to 12.
